Europäisches Patentamt

(19) European Patent Office

Office européen des brevets

(11) Numéro de publication: **0 352 203**
**A2**

## (12) DEMANDE DE BREVET EUROPEEN

(21) Numéro de dépôt: **89420263.9**

(22) Date de dépôt: **20.07.89**

(51) Int. Cl.⁵: **G 01 N 29/02**

(30) Priorité: **22.07.88 FR 8810161**

(43) Date de publication de la demande:
**24.01.90 Bulletin 90/04**

(84) Etats contractants désignés:
**CH DE GB LI NL SE**

(71) Demandeur: **PLUESS STAUFER AG**
**CH-4665 Oftringen (CH)**

(72) Inventeur: **Breuchbühl, Walter**
**Tannerstrasse 21**
**CH-5000 Aarau (CH)**

**Lüscher, Hans-Georg**
**Sonnrain 873**
**CH-5745 Safenwil (CH)**

**Meister, Jean-Jacques**
**Chemin de l'Eglise 10**
**CH-1066 Epalinges (CH)**

(74) Mandataire: **Gaucherand, Michel**
**OMYA S.A. Département Propriété Industrielle 35, Cours Aristide Briand**
**F-69300 Caluire (FR)**

(54) **Dispositif et procédé de mesure simultanée dans un conduit, de la densité, concentration, vitesse d'écoulement, débit et température d'un fluide liquide ou pâteux par transmission ultrasonore.**

㊝ Dispositif pour la mesure simultanée de la densité, de la concentration en matières solides, de la vitesse d'écoulement, du débit et de la température d'un fluide à l'état liquide ou pâteux par transmission ultrasonore se propageant dans ledit fluide, qui se caractérise en ce qu'il comprend :

    a) un conduit de mesure (1) dans lequel circule le fluide,

    b) deux transducteurs (4) et (5) reliés à une source ultrasonore (11) en contact avec le conduit ou en contact avec le fluide s'y trouvant, fonctionnant de manière alternative en émetteur-récepteur et inversement, placés obliquement selon un angle d'incidence α, en position symétrique l'un par rapport à l'autre sur une même génératrice (8) du conduit, de façon que l'onde ultrasonore se propage dans le fluide selon un angle de réfraction β et se réfléchisse en totalité au moins une fois sur la paroi (18) du conduit opposée à celle sur laquelle sont placés les deux transducteurs avant d'être captée par le transducteur-récepteur, ces deux angles α et β étant définis par rapport à un plan perpendiculaire à l'axe du conduit,

    c) une sonde (13) de mesure de température positionnée sur le conduit (1) et en contact direct avec le fluide,

    d) des organes électroniques (14) et informatiques (15) associés à l'ensemble des deux transducteurs et à la sonde de mesure de température, et assurant la gestion des informations qui leur sont transmises sous forme de signaux électriques.

Fig. 5

## Description

### Dispositif et procédé de mesure simultanée dans un conduit, de la densité, concentration, vitesse d'écoulement, débit et température d'un fluide liquide ou pâteux par transmission ultrasonore.

La présente invention a trait à un dispositif et un procédé de mesure simultanée dans un conduit de la densité, de la concentration en matières solides, de la vitesse d'écoulement, du débit et de la température d'un fluide liquide ou pâteux, en utilisant la transmission dans ledit milieu d'ondes ultrasonores.

De nombreux procédés industriels mettant en oeuvre des écoulements de fluides à l'état liquide ou pâteux nécessitent, pour une bonne maîtrise, la connaissance simultanée d'un certain nombre de paramètres concernant ces fluides. Ces paramètres sont essentiellement la vitesse d'écoulement et/ou du débit en conduit et, s'il est homogène, la densité du fluide véhiculé ou, s'il est hétérogène (cas de suspensions), sa concentration en matières solides ainsi que, dans certains cas particuliers, les variations de la nature propre du fluide.

Différentes méthodes pour la mesure de ces caractéristiques ont été utilisées par l'homme de l'Art, qui mettent en oeuvre, selon le cas, soit des moyens de mesure purement hydrauliques, soit des moyens électromagnétiques, soit encore des rayonnements nucléaires. On peut citer, par exemple, l'emploi de débit-mètres à contraction de veines, tels que débit-mètres à diaphragme pour la mesure des vitesses d'écoulement de liquides homogènes, de même que l'emploi de débit-mètres électromagnétiques pour des liquides conducteurs.

Mais ces appareils présentent des inconvénients, dont certains peuvent être considérés comme particulièrement gênants pour l'utilisateur. Ainsi, les différentes techniques créant une perturbation de l'écoulement pour en mesurer la vitesse sont à l'origine de pertes de charge importantes. De même, les débits-mètres électromagnétiques sont limités aux seuls fluides conducteurs. De plus, ces moyens n'autorisent que la mesure des vitesses de circulation en tuyauteries et nécessitent, pour la mesure de la densité du fluide ou la mesure de sa concentration en matières solides, un second appareil indépendant du premier, tel que, par exemple, un densimètre à bulles ou à rayons gamma.

Certains auteurs, en fonction de l'objectif qu'ils se sont assigné, ont développé des méthodes de mesure utilisant la propagation dans le fluide en mouvement d'un faisceau d'ondes ultrasonores.

On connaît, par exemple, grâce au brevet français 2 561 393, un procédé d'identification de la nature de particules solides véhiculées dans un fluide et de détermination de la taille de ces particules, utilisant les propriétés de diffusion par lesdites particules de l'énergie contenue dans un faisceau d'ondes ultrasonores se propageant dans le fluide.

Selon ce procédé, une macro-particule de nature inconnue, interceptée par un faisceau d'ondes ultrasonores, diffuse une partie de l'impulsion qu'elle reçoit. La fraction d'énergie diffusée est mesurée selon deux angles de réception différents prédéterminés; l'amplitude de ladite fraction est convertie en valeurs directement liées à la taille et à la nature de la macro-particule, et lesdites valeurs sont comparées à celles qui sont obtenues dans les mêmes conditions de mesure sur des particules de nature et de dimensions connues.

L'appareil de mesure décrit dans le brevet précité consiste en un ensemble de transducteurs comprenant un émetteur d'ultrasons fixé sur la paroi latérale du conduit dans lequel circule le fluide, et deux récepteurs disposés également sur ledit conduit de façon à recevoir sous deux angles différents préalablement déterminés une partie de la fraction du faisceau ultrasonore diffusée par la particule. La position des deux récepteurs par rapport à l'émetteur d'ultrasons est notamment choisie de manière à ce qu'ils soient situés à l'extérieur de l'angle solide directement couvert par le faisceau ultrasonore et, par conséquent, en dehors de l'impact direct de l'onde incidente.

Ledit procédé n'a pour objectif que la détermination de la nature et de la dimension de particules véhiculées dans un fluide.

On connaît également, grâce au brevet français 2 091 976, un procédé permettant de déterminer la viscosité d'un fluide liquide en écoulement, en mesurant l'absorption et la vitesse de propagation d'un faisceau d'ondes ultrasonores émis perpendiculairement à la direction d'écoulement. Ce procédé perpendiculairement à la direction d'écoulement. Ce procédé fait usage d'une relation mathématique liant directement la quantité d'énergie ultrasonore absorbée à la viscosité du fluide dans lequel l'onde se propage et à la célérité de ladite onde. L'appareil de mesure comporte essentiellement un émetteur ultrasonore et un récepteur, positionnés face à face sur deux génératrices opposées d'un élément de tuyauterie dans lequel circule le fluide dont on veut déterminer la viscosité. Une variation de cette viscosité entraîne une variation de l'absorption des ondes ultrasonores et de la vitesse de propagation de ces ondes. Les deux capteurs. émetteur et récepteur, sont connectés à un dispositif électronique permettant de calculer la viscosité du fluide en mouvement, à partir de la mesure de la quantité de l'onde ultrasonore absorbée et de sa vitesse de propagation dans le fluide. Dans une forme encore plus évoluée de l'invention, on associe à un organe de mesure et de calcul de la viscosité un dispositif de régulation. Il permet de comparer les valeurs des viscosités ainsi déterminées à celle de la viscosité prescrite dans le cadre d'un procédé chimique, dont la conduite dépend de la viscosité du fluide en circulation. Il est ainsi possible de modifier et de réguler la conduite d'un tel procédé.

Dès lors, il apparaît que l'utilisation de seulement deux transducteurs comprenant un émetteur d'ultrasons et un récepteur, positionnés face à face sur deux génératrices opposées de la tuyauterie comme indiqué dans le brevet précédemment décrit, ne permet ni la mesure de la vitesse du fluide en écoulement, ni la mesure de sa densité.

La mesure de la vitesse d'un fluide en écoulement dans un conduit au moyen d'un appareil générateur d'ultrasons a été revendiquée dans le brevet anglais 2 083 624. L'invention consiste à créer délibérément une perturbation dans l'écoulement de ce fluide, et à mesurer l'intervalle de temps s'écoulant lors du passage de ladite perturbation entre deux points choisis du conduit, distants l'un de l'autre d'une longueur connue. On peut ainsi déterminer la vitesse de circulation du fluide.

Pour ce faire, le dispositif mis en oeuvre comporte :
- un générateur d'ondes ultrasonores, modulées en amplitude, dont le rôle est de créer, à intervalles de temps fixés, une perturbation affectant un certain volume du fluide en circulation, et se traduisant par une modification de certaines caractéristiques physiques de ce volume, telles que sa densité et/ou sa température,
- et un ensemble de quatre transducteurs placés sur le conduit à l'aval du générateur d'ondes. Ces transducteurs comportent deux ensembles de capteurs, chaque ensemble étant constitué par l'association d'un transmetteur et d'un récepteur d'ondes ultrasonores, positionnés face à face sur deux génératrices opposées du conduit. Les transmetteurs sont reliés à un générateur d'ondes ultrasonores.

Ces deux ensembles sont placés à une distance parfaitement déterminée l'un de l'autre, et le faisceau ultrasonore émis de façon continue par chacun d'eux se propage dans une direction perpendiculaire à la direction de l'écoulement du fluide.

Lorsque la perturbation créée par le générateur d'ondes situé à l'amont passe successivement dans l'alignement de chaque ensemble, la variation des caractéristiques de densité et/ou de température du fluide que l'accompagne entraîne une modification de l'énergie du faisceau ultrasonore absorbée. Les passages de la perturbation à la hauteur de chaque ensemble de transducteurs sont ainsi détectés par l'émission de signaux électroniques dont les décalages sont analysés et convertis en temps de parcours pour le fluide. Connaissant la distance existant sur le conduit entre les deux ensembles de détection, il est ainsi possible de calculer la vitesse d'écoulement du fluide.

Le dispositif précité est complexe et nécessite, outre un premier générateur et un modulateur d'ultrasons dont le rôle est de créer une perturbation dans le fluide, un second générateur d'ondes ultrasonores associé aux deux ensembles de détecteurs, eux-mêmes connectés à un dispositif de mesure électronique. Les transducteurs, tels que décrits dans ce brevet, ont chacun un rôle spécifique, et ne fonctionnent chacun qu'en émetteur, ou en récepteur, n'émettant ou ne captant qu'un faisceau d'ondes longitudinales perpendiculaire à la direction de l'écoulement du fluide.

Ainsi, le dispositif décrit ne permet que la seule détermination de la vitesse d'écoulement d'un fluide. Cette détermination n'est, en outre, possible que dans la mesure où des perturbations sont créées à une fréquence fixée au sein du fluide. Ces perturbations peuvent cependant provoquer des inconvénients majeurs par modifications de certaines caractéristiques physiques du fluide, telles que la température, la densité, la concentration en matières solides. Or, ces modifications peuvent, dans un certain nombre d'opérations, ne pas être souhaitables en raison des incidences qu'elles risquent d'avoir sur leur déroulement.

On connaît aussi (brevet GB 1 545 286) une méthode de détection par ultrasons des interfaces présentées par des liquides de natures différentes circulant successivement et de façon continue dans un même conduit. La méthode emploie le procédé appelé "sing around process" basé sur le fait que la célérité de propagation du son dans un fluide en mouvement est fonction de la densité dudit fluide. Cette célérité c est liée à la fréquence d'accord f de l'onde ultrasonore par la relation : $\frac{1}{f} = \frac{\ell}{c}$

où $\ell$ représente la distance parcourue par l'onde ultrasonore dans le liquide entre les deux capteurs d'émission et de réception. La recherche de cette fréquence d'accord, qui correspond à la fréquence de répétition de l'émission des ondes ultrasonores, est effectuée à l'aide d'un oscillateur permettant d'ajuster la fréquence d'émission du faisceau ultrasonore en fonction de l'énergie captée sur le récepteur. Cette énergie est convertie en un signal de tension renvoyé sur l'oscillateur. Une variation de la densité du fluide en circulation, par exemple le passage d'une interface entre deux liquides de nature et de poids spécifique différents, conduit à une variation de la fréquence d'accord et, par suite, à celle du signal de tension capté sur le récepteur. Il est ainsi possible de détecter un changement dans la nature des fluides en circulation. Selon ce même brevet GB 1 545 286, et selon une des dispositions décrites, les deux transducteurs émetteur et récepteur sont placés en position oblique sur deux génératrices opposées du conduit. Le faisceau ultrasonore se propageant entre les deux transducteurs fait un angle θ avec l'axe du conduit. Dans ces conditions, si l'on appelle V la vitesse d'écoulement des fluides, la célérité des ultrasons est affectée d'un terme égal à V cosθ correspondant à la projection de la vitesse V sur la direction de propagation de l'onde ultrasonore. Quand celle-ci est dirigée de l'amont vers l'aval, la vitesse c devient c + V cosθ. Quand elle est dirigée de l'aval vers l'amont, la vitesse c devient c - V cosθ. La fréquence d'accord f est dans ces conditions telle que :

$$f_1 = \left[ \frac{\ell}{c - V \cos\theta} \right]^{-1} \quad \text{ou} \quad f_2 = \left[ \frac{\ell}{c + V \cos\theta} \right]^{-1}$$

et devient dépendante de la vitesse de circulation V du fluide. Il est ainsi apparu à l'homme de l'Art que la détection du passage d'interfaces existant entre fluides s'écoulant l'un à la suite de l'autre dans un conduit, par la mesure d'un paramètre relié directement à leur densité pouvait être affectée par une variation de la vitesse d'écoulement desdits fluides dûe, par exemple, à une cause extérieure (fermeture ou ouverture de vannes, arrêt ou mise en route de pompes) et qu'il y avait lieu de s'affranchir de l'influence du terme V. Dans ce but, l'homme de l'Art a été amené (cf brevet GB 1 545 286) à disposer sur le conduit, soit un couple de deux transducteurs placés en position oblique par rapport à l'axe de la tuyauterie sur deux génératrices opposées et fonctionnant alternativement en émetteur-récepteur pendant une première période de temps, puis en récepteur-émetteur lors de la période suivante, soit deux couples constitués chacun par un ensemble de deux transducteurs, dont l'un est toujours émetteur et l'autre toujours récepteur, fonctionnant selon des angles d'incidence $\theta$ opposés, l'un dans le sens de l'écoulement du fluide, l'autre dans le sens contraire.

La position de chaque ensemble de transducteurs est déterminée de façon à ce que l'absorption de l'onde ultrasonore se propageant dans le fluide soit aussi réduite que possible. Ceci implique que ladite onde effectue dans le fluide un parcours limité, et qu'elle soit captée par le transducteur récepteur sans réflexion sur la génératrice opposée à celle sur laquelle est positionné le transducteur-émetteur, aussitôt qu'elle parvient sur ladite génératrice.

Dans l'un et l'autre des dispositifs ainsi décrits, chaque couple de transducteurs émet en permanence un signal ultrasonore sinusoïdal, et est relié à un circuit électronique de mesure des fréquences d'accord $f_1$ et $f_2$. Les deux fréquences sont combinées dans un circuit de mixage et passent dans un filtre afin de ne recueillir, à la sortie de ce filtre, qu'un signal sinusoïdal de fréquence égale à la somme $f_1 + f_2$. La valeur de la fréquence N résultante est en effet égale à :

$$N = f_1 + f_2 = \left[ \frac{\ell}{c - V \cos\theta} \right]^{-1} + \left[ \frac{\ell}{c + V \cos\theta} \right]^{-1}$$

$$= 2 \frac{c}{\ell}$$

résultat qui est indépendant de la vitesse V de circulation du fluide dans le conduit. Toute variation du débit d'un fluide, dont la composition reste constante, n'a par suite aucune incidence sur la méthode utilisée.

Ainsi, le procédé selon les revendications formulées dans le brevet GB 1 545 286 ne peut être utilisé pour la mesure de la vitesse propre d'écoulement de fluides dans le conduit, puisqu'il repose précisément et de façon fondamentale sur la nécessité de s'affranchir de ladite vitesse.

Or, il se révèle de plus en plus nécessaire pour la maîtrise de la conduite de procédés industriels de disposer simultanément de plusieurs paramètres d'un fluide en circulation tels que vitesse d'écoulement, débit, densité, concentration en matières solides, et température.

Aucun des dispositifs et des procédés décrits dans l'art antérieur et faisant usage d'ondes ultrasonores n'offre cette possibilité. La Demanderesse, poursuivant ses recherches, a trouvé et mis au point dispositif et procédé assurant la mesure simultanée de la vitesse d'écoulement d'un fluide à l'état liquide ou pâteux circulant dans un conduit, de son débit, de sa densité et de sa concentration et matières solides, par émission d'ondes ultrasonores se propageant dans ledit fluide.

Selon l'invention, le dispositif mis en oeuvre comprend :

a) un conduit de mesure dans lequel circule le fluide,

b) deux transducteurs reliés à une source ultrasonore, en contact avec le conduit ou en contact avec le fluide s'y trouvant, fonctionnant de manière alternative en émetteur-récepteur et inversement, placés obliquement selon un angle d'incidence $\alpha$, en position symétrique l'un par rapport à l'autre sur une même génératrice du conduit, de façon que l'onde ultrasonore se propage dans le fluide selon un angle de réfraction $\beta$ et se réfléchisse en totalité au moins une fois sur la paroi du conduit opposée à celle sur laquelle sont placés les deux transducteurs, avant d'être captée par le transducteur-récepteur, ces deux

angles, $\alpha$ et $\beta$, étant définis par rapport à un plan perpendiculaire à l'axe du conduit,

c) une sonde de mesure de température positionnée sur le conduit et en contact direct avec le fluide,

d) des organes électroniques et informatiques, associés à l'ensemble des deux transducteurs et à la sonde de mesure de température, et assurant la gestion des informations qui leur sont transmises sous forme de signaux électriques.

Afin de placer obliquement les transducteurs selon l'angle d'incidence $\alpha$ en contact soit avec le conduit contenant le fluide, soit avec le fluide contenu, le dispositif selon l'invention peut être doté, au choix, de l'une ou l'autre des quatre variantes suivantes.

Quand il est souhaitable que les transducteurs soient en contact direct avec le conduit contenant le fluide ou avec le fluide contenu dans ledit conduit, l'inclinaison des transducteurs est obtenue grâce à une géométrie adaptée du conduit, doté en outre d'une ouverture appropriée si le contact direct avec le fluide contenu est recherché.

Quand il est souhaitable que les transducteurs soient en contact indirect avec le conduit contenant le fluide ou avec le fluide contenu dans ledit conduit, l'inclinaison des transducteurs est obtenue par l'insertion d'un sabot entre transducteur et conduit. Dans ce cas, la géométrie initiale du conduit est inchangée, mais ledit conduit est muni d'une ouverture appropriée si le contact indirect avec le fluide contenu est recherché.

Quand le dispositif selon l'invention comporte des sabots insérés, lesdits sabots permettent non seulement de régler aisément la position incidente des transducteurs, mais aussi d'assurer leur protection thermique dans le cas où le fluide soumis aux mesures se trouve à haute température.

L'invention concerne également un procédé mettant en oeuvre le dispositif précité.

Selon l'invention, le procédé se caractérise en ce que :

a) on émet à partir d'un transducteur-émetteur 1 pendant une période de temps une onde ultrasonore se propageant de l'amont vers l'aval dans le fluide sous un angle $\beta$ par rapport à un plan perpendiculaire à l'axe du conduit, de telle manière que ladite onde se réfléchisse de préférence en totalité au moins une fois sur la génératrice opposée à celle sur laquelle est placé le transducteur-émetteur 1, avant d'être captée par un transducteur-récepteur 2 placé sur la même génératrice que 1 en aval de ce dernier,

b) on mesure le temps de parcours $t_{1-2}$ mis par l'onde ultrasonore entre son émission et sa réception,

c) on inverse les rôles entre les transducteurs 1 et 2, et on émet pendant la période de temps suivante une onde ultrasonore se propageant du transducteur-émetteur 2 vers le transducteur-récepteur 1 sous le même angle $\beta$ dans le sens inverse de la circulation du fluide,

d) on mesure le temps de parcours $t_{2-1}$ de ladite onde entre son émission et sa réception,

e) simultanément, on mesure la température T du fluide à l'aide d'une sonde thermométrique placée sur le conduit en contact direct avec ledit fluide,

f) on traite les valeurs mesurées de $t_{1-2}$, $t_{2-1}$ et T dans un calculateur permettant de déterminer, d'une part la vitesse V de circulation du fluide et, d'autre part, la valeur de la densité et/ou de la concentration en particules solides du fluide en circulation.

De façon plus précise, si l'on appelle $c_s$ la vitesse de propagation de l'onde ultrasonore dans le fluide, V la vitesse d'écoulement dudit fluide, D le diamètre du conduit et $\beta$ l'angle de pénétration de l'onde ultrasonore dans le fluide par rapport à un plan perpendiculaire à l'axe du conduit, les temps de parcours $t_{1-2}$ et $t_{2-1}$ sont exprimés par les relations ci-après :

$$t_{1-2} = \frac{(n+1)D}{\cos\beta} \cdot \frac{1}{c_s + V\sin\beta} \qquad (1)$$

$$\text{et } t_{2-1} = \frac{(n+1)D}{\cos\beta} \cdot \frac{1}{c_s - V\sin\beta} \qquad (2)$$

d'où l'on tire une première formule pour la vitesse :

$$V = \frac{(n+1)D}{\sin 2\beta} \cdot \frac{t_{2-1} - t_{1-2}}{t_{2-1} \cdot t_{1-2}} \qquad (3)$$

ou encore une deuxième formule :

$$V = \frac{4(n+1)D}{\sin 2\beta} \cdot \frac{t_{2-1} - t_{1-2}}{(t_{1-2} + t_{2-1})^2} \qquad (3')$$

expressions indépendantes de $c_s$.

Dans ces diverses formules, n peut prendre des valeurs entières 1, 2, 3 etc. selon le nombre de réflexions de l'onde sur les parois du conduit souhaité. Ce nombre de réflexions, toujours au moins égal à 1, est, dans la présente invention, toujours impair.

La précision de mesure de V, liée à l'appréciation de la différence des temps de parcours $\Delta t = t_{2-1} - t_{1-2}$ est d'autant meilleure que la distance de parcours de l'onde ultrasonore dans chaque sens de propagation est grande et comporte, de ce fait, au moins une réflexion sur la génératrice opposée.

Il est également souhaitable que l'onde ultrasonore soit, durant son parcours, aussi faiblement absorbée que possible, et que soient limitées à chaque réflexion sur les parois du conduit les pertes d'énergie par transmission dans lesdites parois. De ce fait, le dispositif et le procédé selon l'invention font usage de la réflexion totale de l'onde sur les parois du conduit.

Les paramètres, ci-après définis, intervenant dans le cadre de l'invention :
- $\alpha$ angle d'incidence de l'onde ultrasonore, cet angle étant confondu avec l'angle d'inclinaison de l'axe du transducteur par rapport au plan perpendiculaire à l'axe du conduit,
- c vitesse de propagation de l'onde ultrasonore qui, selon la variante mise en oeuvre, correspond à la vitesse de propagation de l'onde dans les sabots des transducteurs, dans la paroi du conduit, ou bien est identique à $c_s$ dans le cas du contact direct entre le transducteur et le fluide,
- $c_s$ vitesse de propagation de l'onde ultrasonore dans le fluide,
- $c_p$ vitesse de propagation de l'onde ultrasonore dans la paroi du conduit,
- $\beta$ angle de réfraction de l'onde ultrasonore se propageant dans le fluide mesuré par rapport au plan perpendiculaire à l'axe du conduit,
sont liés par la relation suivante :

$$\sin\beta = \frac{c_s}{c} \sin\alpha \qquad (4)$$

Selon la valeur de l'angle $\beta$ sous lequel l'onde ultrasonore intercepte l'interface entre fluide et paroi du conduit, ladite onde ultrasonore est soit partiellement réfléchie, en donnant naissance à des ondes transmises longitudinales et/ou transverses soit totalement réfléchie.

De ce fait, une réflexion totale est recherchée, afin que l'onde qui se propage dans le fluide conserve un maximum d'énergie avant d'être captée sur le transducteur-récepteur. Cette réflexion totale détermine le choix de l'angle $\alpha$ d'inclinaison de l'axe des transducteurs, et permet de définir une distance L entre le centre du faisceau ultrasonore pénétrant dans le fluide et le centre du faisceau ultrasonore sortant du fluide après la réflexion totale. Cette distance est donnée par la relation L = 2 nD tg$\beta$ , dans laquelle n peut prendre des valeurs entières au moins égales à 1, est choisi selon les caractéristiques du fluide à mesurer. Il est fréquent de le choisir de préférence entre 1 et 5. La paroi du conduit peut être réalisée en des matériaux très divers tels que, par exemple, aciers, aluminium et alliages, verre, matières polymères et, selon le matériau utilisé, l'angle $\beta$ conduisant à la réflexion totale est différent.

D'une manière générale, la réflexion totale mise en oeuvre selon l'invention est obtenue quand l'angle $\beta$ est tel que :

$$\sin\beta \geq \frac{c_s}{c_p} \qquad (5)$$

Dans le cas le plus général où la paroi du conduit est réalisée en acier, et le fluide à mesurer est d'origine aqueuse, la réflexion totale de l'onde ultrasonore sur ladite paroi nécessite un angle $\beta$ égal ou supérieur à 28°.

Dans le cas où les transducteurs sont munis de sabots, les matériaux constitutifs desdits sabots doivent satisfaire souhaitablement aux trois conditions suivantes :
- absorber le moins possible l'onde ultrasonore se propageant dans le sabot entre l'organe piézoélectrique du transducteur et l'interface sabot-conduit ou sabot-fluide, afin de limiter les pertes d'énergie pendant cette propagation,
- posséder à la fois une faible conductibilité thermique et une bonne résistance à la température, de façon à présenter un excellent comportement au contact de fluides circulant à température élevée, sans qu'il y ait altération dans le temps de leurs propriétés physico-chimiques,

- et créer une réflexion minimale de l'onde ultrasonore à l'interface sabot-conduit ou sabot-fluide.

Ces conditions sont satisfaites au mieux, comme a pu le constater la Demanderesse, par l'emploi de matières polymères et préférentiellement, parmi celles-ci, de polyimides.

L'utilisation de sabots en polyimides, possédant de par leur constitution, à la fois une bonne résistance à la chaleur (à des températures voisines de 250°C à 260°C), un faible coefficient de conductibilité thermique, et une faible absorption des ultrasons, conduit, pour un angle de réfraction $\beta$ défini par la relation (5), à choisir un angle $\alpha$ d'inclinaison des sabots défini par la relation (4).

Dès lors l'onde ultrasonore atteignant la génératrice du conduit opposée à celle sur laquelle est positionné le transducteur-émetteur subit une réflexion totale et la perte d'énergie, qui aurait été consécutive à l'émission d'ondes transmises longitudinales et/ou transverses lors de la réflexion sur la paroi du conduit, est ainsi nulle.

La mesure à l'aide d'une sonde thermométrique de la température T du fluide et la mesure des temps de parcours de l'onde ultrasonore $t_{1-2}$ ou $t_{2-1}$, permettent de déterminer la densité et/ou la concentration en matières solides du fluide circulant.

La vitesse $c_s$ de propagation de l'onde dans le fluide est en dépendance directe avec sa densité et/ou sa concentration en matières solides. Les temps de parcours $t_{1-2}$ et $t_{2-1}$ sont, quant à eux, inversement proportionnels à cette vitesse $c_s$ (relations (1) et (2)).

Grâce à des échantillons témoins du fluide à contrôler ultérieurement de manière industrielle au moyen du dispositif selon l'invention, échantillons dont on connaît la nature, la composition, la densité et/ou la concentration en matières solides, on mesure les variations du temps de parcours $t_{1-2}$ et $t_{2-1}$. Des diagrammes tridimensionnels sont établis à partir des mesures des temps de parcours $t_{1-2}$ et $t_{2-1}$, des mesures de la température T, de la densité d et de la concentration en matières solides $m_s$.

Ces diagrammes tridimensionnels résultent de l'établissement mathématique de surfaces de régression calculées à partir des paramètres température, temps de parcours $t_{1-2}$ et $t_{2-1}$ et densité ou concentration en matières solides. Dès lors, pour un fluide de même nature, mais de densité ou de concentration non connue, il est possible, à partir de trois des quatre paramètres, T, $t_{1-2}$ et $t_{2-1}$ par exemple, mesurés expérimentalement sur ledit fluide, de porter ces données dans le calculateur qui, par usage des diagrammes, indiquera la valeur du quatrième paramètre, densité d ou concentration en matières solides $m_s$.

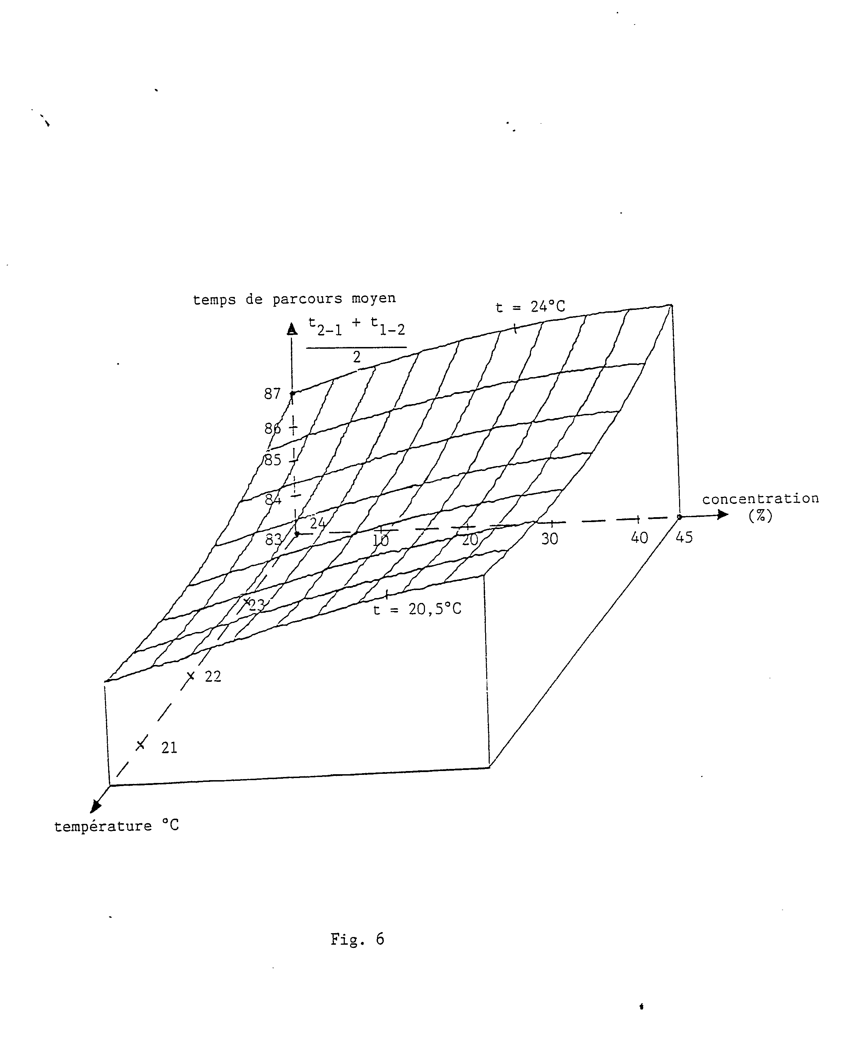

Le principe d'utilisation des diagrammes, qui se présentent sous forme d'une surface de régression incurvée (voir figure 6), est le suivant :

- la détermination des couples de valeurs, temps de parcours moyen

$$\frac{(t_{1-2} + t_{2-1})}{2}$$

de l'onde ultrasonore et température du fluide, qui constituent les trois variables mesurées du système, permet de définir un point dans le plan

$$[T; \frac{(t_{1-2} + t_{2-1})}{2}]$$

- la parallèle à l'axe des densités, ou des concentrations, passant par ce point coupe la surface du diagramme en un point qui, projeté sur l'axe des densités et/ou concentrations en matières solides, donne la valeur recherchée de la densité et/ou de la concentration en matières solides du fluide. Cette valeur est obtenue avec précision par interpolation entre les valeurs propres des points de mesure utilisés pour l'établissement du diagramme.

Simultanément à la mesure de la densité ou de la concentration en matière sèche du fluide, la vitesse d'écoulement est déterminée par la relation (3), en effectuant les mesures de $t_{1-2}$ et $t_{2-1}$, ayant fixé le diamètre D du conduit, le nombre de réflexions totales n et l'angle de réfraction $\beta$.

La détermination simultanée de la densité, concentration, vitesse d'écoulement est réalisée grâce à l'introduction dans un dispositif informatisé des données mathématiques définissant la surface de régression obtenue comme cela a déjà été dit, la vitesse d'écoulement selon la relation (3), les données géométriques du dispositif (D, n, $\beta$), ainsi que les valeurs mesurées T, $t_{1-2}$ et $t_{2-1}$. A l'aide du même dispositif informatisé, il est possible de déterminer les débits et les débits massiques du fluide à contrôler.

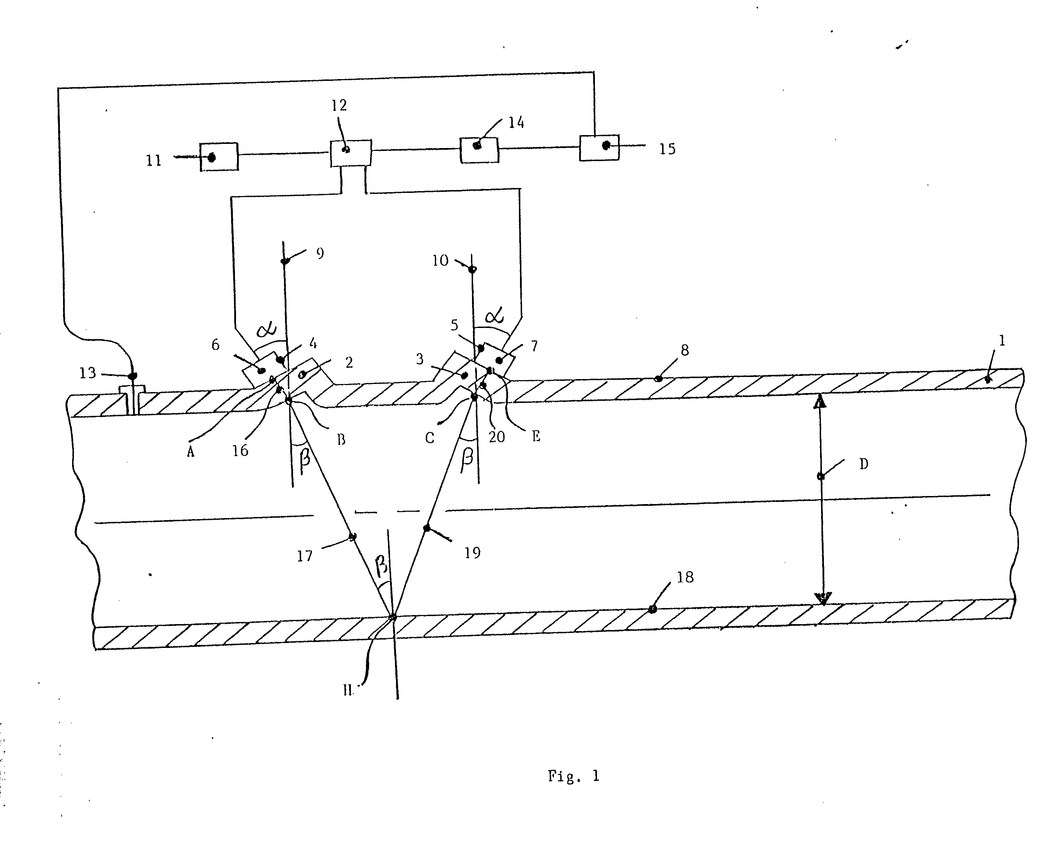

D'une façon plus concrète, le dispositif selon l'invention utilisé pour la mesure sera mieux compris à l'aide des figures 1 à 6 données à titre illustratif.

Selon la figure 1, illustration de la première variante (qui représente une coupe en élévation), dans laquelle les transducteurs sont en contact direct avec le conduit contenant le fluide, le dispositif se compose du conduit de mesure 1 constitué par un élément de tuyauterie de diamètre D de géométrie adaptée car doté de deux plate-formes inclinées 2 et 3 et de deux transducteurs émetteur-récepteur 4 et 5, constitués eux-mêmes d'éléments piézoélectriques 6 et 7. Les deux plate-formes 2 et 3 destinées à l'implantation des transducteurs émetteur-récepteur sont en position symétrique et inclinées d'un angle $\alpha$ par rapport à un plan perpendiculaire à l'axe du conduit 1. Les surfaces des plate-formes en contact avec le fluide sont mises en forme de telle sorte que les turbulences, les pertes de charge nouvelles et les zones de rétention de la matière solide en suspension dans le fluide soient de préférence empêchées.

Les deux transducteurs émetteur-récepteur 4 et 5 placés sur les prolongements de la même génératrice 8 sont respectivement fixés sur les plate-formes 2 et 3 en contact direct avec le conduit contenant le fluide circulant. Ils sont dès lors inclinés du même angle $\alpha$ par rapport aux perpendiculaires 9 et 10 à l'axe du conduit 1.

Les deux transducteurs 4 et 5 sont connectés à un générateur d'impulsions 11 par l'intermédiaire d'un commutateur 12 permettant d'inverser les rôles d'émetteur et de récepteur des deux transducteurs 4 et 5 à intervalles réguliers $t_s$ (temps entre deux commutations du switch). Une sonde thermométrique 13 est placée sur le conduit 1 en contact direct avec le fluide en circulation. Cette sonde 13, ainsi que les deux transducteurs 4 et 5 sont connectés électriquement avec un ensemble d'organes électroniques et informatiques 14 et 15, dont la fonction est d'analyser les signaux électriques qui leur sont transmis et de les transformer simultanément en éléments de réponse : vitesse de circulation et/ou débit du fluide, densité et/ou concentration en matières solides et température du fluide. Le procédé de mesure utilisant le dispositif ainsi décrit est réalisé selon les deux étapes suivantes. Au cours d'une première période de temps, le transducteur 4 est connecté grâce au commutateur 12 au générateur d'impulsions 11, et émet, par l'intermédiaire de son organe piézoélectrique 6, une impulsion ultrasonore, faisant un angle $\alpha$ avec la perpendiculaire 9 à l'axe du conduit 1. L'impulsion parvient en A à l'interface entre transducteur 4 et la paroi externe du conduit 1 et se propage dans l'épaisseur dudit conduit selon la direction 16.

Puis, l'impulsion ultrasonore selon la direction 16 parvient au point de contact B de l'interface entre la paroi interne du conduit 1 et le fluide contenu, pénètre dans le fluide selon la direction 17, faisant un angle $\beta$ avec la perpendiculaire 9 à l'axe du conduit de mesure. Après avoir parcouru dans le fluide une distance égale à $\dfrac{D}{\sin\beta}$ l'impulsion ultrasonore parvient en H sur la génératrice opposée 18 du conduit 1, et subit alors une réflexion totale sous le même angle $\beta$. L'impulsion réfléchie 19, après avoir effectué dans le fluide un parcours de même longueur $\dfrac{D}{\sin\beta}$ parvient en C à l'interface entre le fluide et la paroi interne du conduit 1 et se propage dans l'épaisseur dudit conduit selon la direction 20. L'impulsion ultrasonore parvient alors au point de contact E de l'interface entre la paroi externe du conduit 1 et le transducteur 5.

L'impulsion est captée par l'organe piézoélectrique 7 du transducteur 5 qui fonctionne en récepteur et qui, de ce fait, est connecté par l'intermédiaire du commutateur 12 aux organes électroniques et informatiques 14 et 15. Le temps $t_{1-2}$ mis par l'impulsion ultrasonore entre son émission en 4 et sa réception en 5 pour effectuer le trajet 16, 17, 19 et 20 est ainsi mesuré par les organes électroniques et informatiques 14 et 15.

A l'issue du temps $t_s$, le commutateur 12 inverse les liaisons électriques entre générateur d'impulsions 11, organes électroniques et informatiques 14 et 15 et transducteurs 4 et 5, de telle sorte que le transducteur 4, qui fonctionnait jusqu'alors en émetteur, joue pendant la période de temps $t_s$ suivante le rôle de récepteur, et inversement, que le transducteur 5, qui jouait le rôle de récepteur, fonctionne au cours de cette même période de temps $t_s$ en émetteur. Ainsi, l'impulsion ultrasonore émise par le transducteur 5 effectue, selon le même trajet mais en sens inverse, le parcours 20, 19, 17 et 16 avant d'être captée par le transducteur 4 fonctionnant en récepteur. Le temps $t_{2-1}$, mis par l'impulsion ultrasonore entre son émission en 5 et sa réception en 4, est ainsi mesuré par les organes électroniques et informatiques 14 et 15. Le calcul de la vitesse V de circulation du fluide ainsi que son débit, en fonction des temps $t_{1-2}$ et $t_{2-1}$, est ainsi effectué à l'issue de la période de temps $2\,t_s$ par les organes électroniques et informatiques 14 et 15.

La génératrice 8, les perpendiculaires 9 et 10 et les parcours 16, 17, 19 et 20 de l'impulsion ultrasonore sont situés dans un même plan passant par l'axe du conduit 1.

De même, les signaux électriques transmis par la sonde thermométrique 13, connectée à l'organe électronique et informatique 15, sont analysés par ce dernier et contribuent à la détermination de la densité du fluide en circulation et/ou de sa concentration en matières solides.

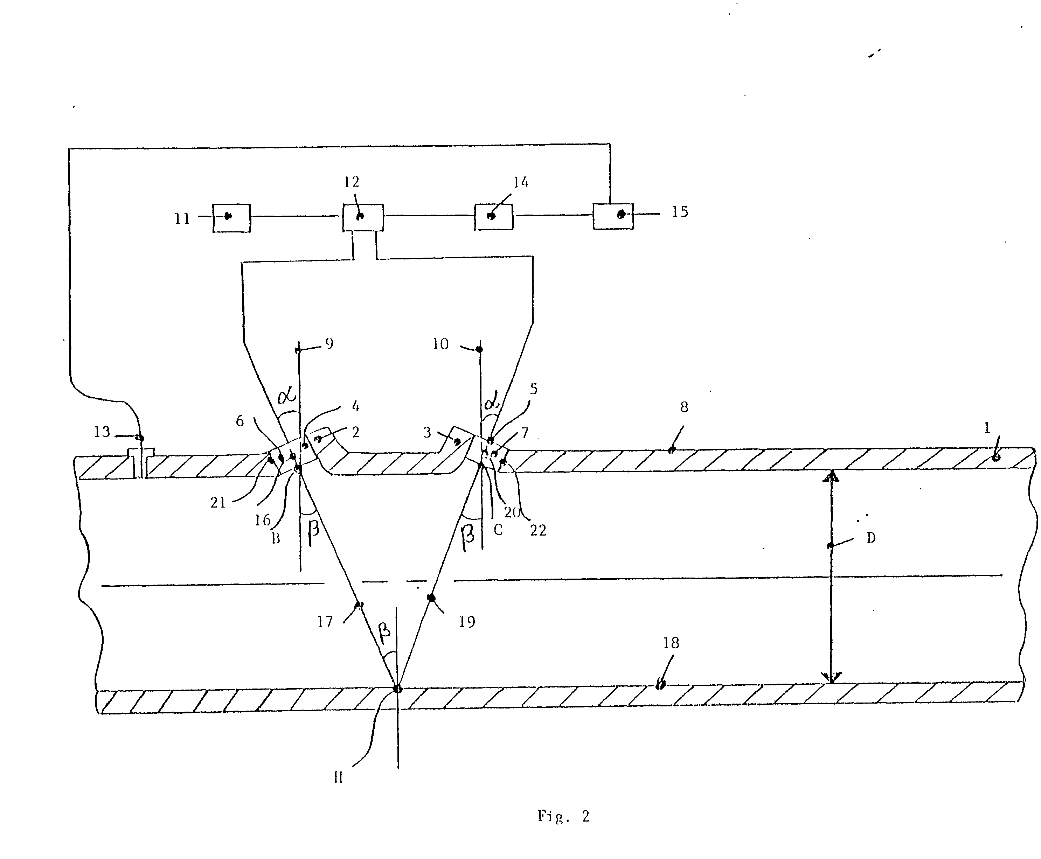

Selon la figure 2, illustrant la deuxième variante (selon une coupe en élévation) dans laquelle les transducteurs sont en contact direct avec le fluide contenu dans le conduit, le dispositif se compose du conduit de mesure 1, constitué par exemple par un élément de tuyauterie de diamètre D, doté des deux plate-formes inclinées 2 et 3 précitées et de deux transducteurs émetteur-récepteur 4 et 5 constitués eux-mêmes des éléments piézoélectriques 6 et 7.

Les deux plate-formes 2 et 3 sont inclinées d'un angle $\alpha$ par rapport à un plan perpendiculaire à l'axe du conduit 1 et sont pourvues des ouvertures 21 et 22 permettant l'implantation des transducteurs émetteur-récepteur 4 et 5 en position symétrique et en contact direct avec le fluide contenu dans le conduit.

Lesdits transducteurs émetteur-récepteur 4 et 5 sont dès lors inclinés du même angle $\alpha$ par rapport aux perpendiculaires 9 et 10 à l'axe du conduit 1. De même que dans l'exemple 1, les transducteurs émetteur-récepteur 4 et 5 sont connectés à un générateur d'impulsions 11 par l'intermédiaire du commutateur 12 permettant d'inverser les rôles d'émetteur et de récepteur des deux transducteurs 4 et 5 à intervalles réguliers $t_s$ (temps entre deux commutations). Une sonde thermométrique 13 est placée sur le conduit 1 en contact direct avec le fluide en circulation. Cette sonde 13, ainsi que les deux transducteurs 4 et 5 sont connectés électriquement avec un ensemble d'organes électroniques et informatiques 14 et 15, dont la fonction est d'analyser les signaux électriques qui leur sont transmis et de les transformer simultanément en éléments de réponse : vitesse de circulation et/ou débit du fluide, densité et/ou concentration en matières solides et température du fluide.

Le procédé de mesure, utilisant le dispositif ainsi décrit, est réalisé selon les deux étapes suivantes. Au cours d'une première période de temps, le transducteur 4 est connecté, grâce au commutateur 12, au générateur d'impulsions 11 et émet par l'intermédiaire de son organe piézoélectrique 6, une impulsion ultrasonore selon la direction 16, faisant un angle $\alpha$ avec la perpendiculaire 9 à l'axe du conduit. L'impulsion parvient en B à l'interface entre le transducteur 4 et le fluide contenu dans le conduit 1, pénètre dans ledit fluide selon la direction 17 en faisant un angle $\beta = \alpha$ avec la perpendiculaire 9 à l'axe du conduit de mesure.

Après avoir parcouru dans le fluide une distance égale à

$$\frac{D}{\sin\beta}$$

l'impulsion ultrasonore parvient en H sur la génératrice opposée 18 du conduit 1 et subit alors une réflexion totale sous le même angle $\beta$. L'impulsion réfléchie 19, après avoir effectué dans le fluide un parcours de même longueur

$$\frac{D}{\sin\beta}$$

parvient en C à l'interface entre le fluide et le transducteur 5, pénètre dans le transducteur 5 selon un angle $\alpha$ par rapport à la perpendiculaire 10 à l'axe du conduit 1.

L'impulsion est captée par l'organe piézoélectrique 7 du transducteur 5 qui fonctionne en récepteur et qui, de ce fait, est connecté par l'intermédiaire du commutateur 12 aux organes électroniques et informatiques 14 et 15. Le temps $t_{1-2}$ mis par l'impulsion ultrasonore entre son émission en 4 et sa réception en 5 pour effectuer le trajet 16, 17, 19 et 20 est ainsi mesuré par les organes électroniques et informatiques 14 et 15.

A l'issue du temps $t_s$, le commutateur 12 inverse les liaisons électriques entre générateur d'impulsions 11, organes électroniques et informatiques 14 et 15 et transducteurs 4 et 5, de telle sorte que le transducteur 4, qui fonctionnait jusqu'alors en émetteur, joue pendant la période de temps $t_s$ suivante le rôle de récepteur, et inversement, que le transducteur 5, qui jouait le rôle de récepteur, fonctionne au cours de cette même période de temps $t_s$ en émetteur. Ainsi, l'impulsion ultrasonore émise par le transducteur 5 effectue, selon le même trajet mais en sens inverse, le parcours 20, 19, 17 et 16 avant d'être captée par le transducteur 4 fonctionnant en récepteur. Le temps $t_{2-1}$, mis par l'impulsion ultrasonore entre son émission en 5 et sa réception en 4, est ainsi mesuré par les organes électroniques et informatiques 14 et 15. Le calcul de la vitesse V de circulation du fluide ainsi que son débit, en fonction des temps $t_{1-2}$ et $t_{2-1}$, est ainsi effectué à l'issue de la période de temps $2 t_s$ par les organes électroniques et informatiques 14 et 15.

La génératrice 8, les perpendiculaires 9 et 10 et les parcours 16, 17, 19 et 20 de l'impulsion ultrasonore sont situés dans un même plan passant par l'axe du conduit 1.

De même, les signaux électriques, transmis par la sonde thermométrique 13 connectée à l'organe électronique et informatique 15, sont analysés par ce dernier et contribuent à la détermination de la densité du fluide en circulation et/ou de sa concentration en matières solides.

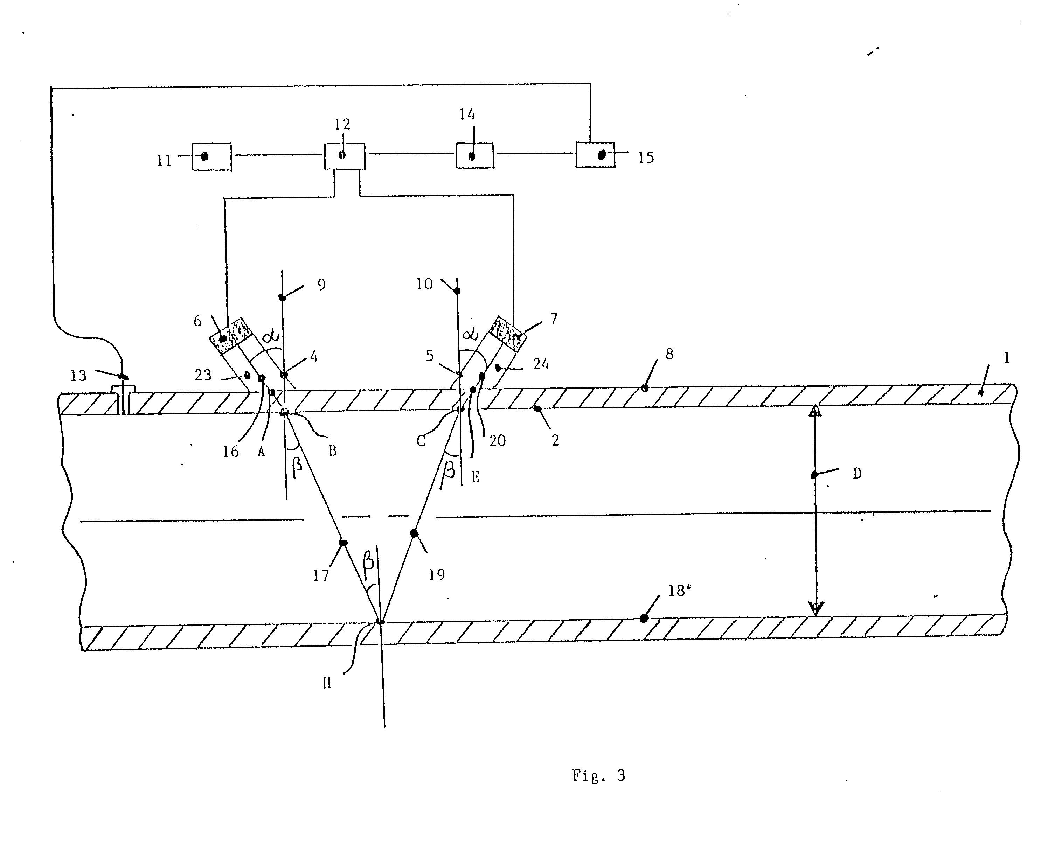

Selon la figure 3, illustrant la troisième variante (qui représente une coupe en élévation), dans laquelle les transducteurs sont en contact indirect avec le conduit contenant le fluide, le dispositif se compose du conduit de mesure 1, constitué par un élément de tuyauterie de diamètre D et de deux transducteurs émetteur-récepteur 4 et 5, comportant les éléments piézoélectriques 6 et 7 et des sabots 23 et 24.

Sur l'une des génératrices 8 du conduit 1 sont fixés les deux transducteurs émetteur-récepteur 4 et 5, constitués eux-mêmes des éléments piézoélectriques 6 et 7 solidaires des sabots 23 et 24.

Les deux sabots 23 et 24 sont placés en position symétrique par rapport à un plan perpendiculaire à l'axe du conduit, en contact direct avec la paroi dudit conduit contenant le fluide circulant. Les sabots 23 et 24 sont inclinés d'un angle $\alpha$ par rapport aux perpendiculaires 9 et 10 à la génératrice 8 du conduit 1 sur laquelle ils sont positionnés. Les deux transducteurs 4 et 5 sont connectés au générateur d'impulsion 11 par l'intermédiaire du commutateur 12 permettant d'inverser les rôles d'émetteur et de récepteur des deux transducteurs 4 et 5 à intervalles réguliers $t_s$ (temps entre deux commutations du switch).

Une sonde thermométrique 13 est placée sur le conduit 1 en contact direct avec le fluide en circulation. Cette sonde 13 ainsi que les deux transducteurs 4 et 5 sont connectés électriquement avec l'ensemble d'organes électroniques et informatiques 14 et 15, dont la fonction est d'analyser les signaux électriques qui leur sont transmis et de les transformer simultanément en éléments de réponse : vitesse de circulation et/ou débit de fluide, densité et/ou concentration en matières solides et température du fluide. Le procédé de mesure, utilisant le dispositif ainsi décrit, est réalisé selon les deux étapes suivantes. Au cours d'une première période de temps, le transducteur 4 est connecté grâce au commutateur 12 au générateur d'impulsions 11 et émet, par l'intermédiaire de son organe piézoélectrique 6, une impulsion ultrasonore qui se propage dans le sabot 23, selon une direction 16, faisant un angle $\alpha$ avec la perpendiculaire 9 à l'axe du conduit.

L'impulsion parvient en A à l'interface entre le sabot 23 et la paroi externe du conduit 1, y subit une réfraction (non représentée) et se propage dans l'épaisseur dudit conduit, parvient au point de contact B de l'interface entre la paroi interne du conduit 1 et le fluide contenu, y subit une réfraction et pénètre dans le fluide selon la direction 17, en faisant un angle de réfraction $\beta$ avec la perpendiculaire 9 à l'axe du conduit de mesure. Après avoir parcouru dans le fluide une distance égale à

$$\frac{D}{\sin\beta}$$

l'impulsion ultrasonore parvient en H sur la génératrice opposée 18 du conduit 1, et subit alors une réflexion totale sous le même angle $\beta$. L'impulsion réfléchie 19, après avoir effectué dans le fluide un parcours de même longueur

$$\frac{D}{\sin\beta}$$

parvient en C à l'interface entre le fluide et la paroi interne du conduit 1 se propage dans l'épaisseur dudit conduit. L'impulsion ultrasonore parvient alors au point de contact E de l'interface entre la paroi externe du conduit 1 et le sabot 24, y subit une réfraction (non représentée) selon un angle $\alpha$ par rapport à la perpendiculaire 10 à la génératrice 8 du conduit 1.

L'impulsion ultrasonore se propage dans le sabot 24, selon la direction 20, est captée par l'organe piézoélectrique 7 du transducteur 5 qui fonctionne en récepteur et qui est connecté par l'intermédiaire du commutateur 12 aux organes électroniques et informatiques 14 et 15.

Le temps $t_{1-2}$, mis par l'impulsion ultrasonore entre son émission en 4 et sa réception en 5 pour effectuer le trajet 16, 17, 19 et 20, est ainsi mesuré par les organes électroniques et informatiques 14 et 15.

A l'issue du temps $t_s$, le commutateur 12 inverse les liaisons électriques entre générateur d'impulsions 11, organes électroniques et informatiques 14 et 15 et transducteurs 4 et 5, de telle sorte que le transducteur 4, qui fonctionnait jusqu'alors en émetteur, joue pendant la période de temps $t_s$ suivante le rôle de récepteur, et inversement, que le transducteur 5, qui jouait le rôle de récepteur, fonctionne au cours de cette même période de temps $t_s$ en émetteur. Ainsi, l'impulsion ultrasonore émise par le transducteur 5 effectue, selon le même trajet mais en sens inverse, le parcours 20, 19, 17 et 16 avant d'être captée par le transducteur 4 fonctionnant en récepteur. Le temps $t_{2-1}$, mis par l'impulsion ultrasonore entre son émission en 5 et sa réception en 4, est ainsi mesuré par les organes électroniques et informatiques 14 et 15. Le calcul de la vitesse V de circulation du fluide ainsi que son débit, en fonction des temps $t_{1-2}$ et $t_{2-1}$ est ainsi effectué à l'issue de la période de temps 2 $t_s$ par les organes électroniques et informatiques 14 et 15.

La génératrice P, les perpendiculaires 9 et 10 et leurs parcours 16, 17, 19 et 20 de l'impulsion ultrasonore sont situés dans un même plan passant par l'axe du conduit 1.

De même, les signaux électriques transmis par la sonde thermométrique 13 connectée à l'organe électronique et informatique 15, sont analysés par ce dernier et contribuent à la détermination de la densité du fluide en circulation et/ou de sa concentration en matières solides.

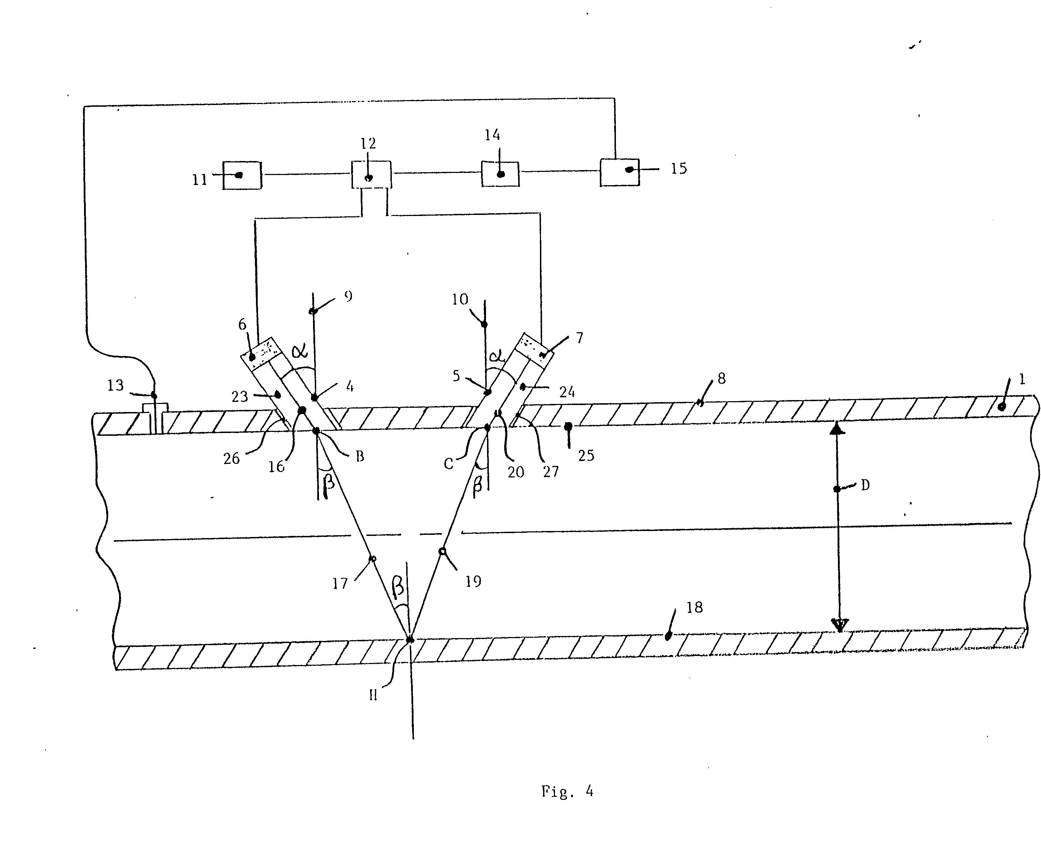

Selon la figure 4, illustration de la quatrième variante (qui représente une coupe en élévation), dans laquelle les transducteurs sont en contact indirect avec le fluide contenu dans le conduit de mesure, le dispositif se compose du conduit de mesure 1 (élément de tuyauterie de diamètre D) et de deux transducteurs émetteur-récepteur 4 et 5 comportant les éléments piézoélectriques 6 et 7 ainsi que des sabots 23 et 24.

Sur la génératrice 25 du conduit 1 sont fixés les deux transducteurs émetteur-récepteur 4 et 5 par l'intermédiaire de leurs sabots 23 et 24, placés en position symétrique par rapport à un plan perpendiculaire à l'axe du conduit, dans des ouvertures 26 et 27 aménagées dans la paroi dudit conduit, de façon à être maintenus en contact direct avec le fluide circulant dans le conduit 1.

Les surfaces des sabots en contact avec le fluide sont mises en forme de telle manière que soient neutralisées toutes turbulences, perte de charge nouvelle, zones de rétention de la matière solide présente dans la suspension.

Les sabots 23 et 24 sont inclinés d'un angle $\alpha$ par rapport aux perpendiculaires 9 et 10 à la génératrice 25 du conduit 1 sur laquelle ils sont positionnés. Les deux transducteurs 4 et 5 sont connectés à un générateur d'impulsion 11 par l'intermédiaire d'un commutateur 12 permettant d'inverser les rôles d'émetteur et de récepteur des deux transducteurs 4 et 5 à intervalles réguliers $t_s$ (temps entre deux commutations du switch). Une sonde thermométrique 13 est placée sur le conduit 1 en contact direct avec le fluide en circulation. Cette sonde 13, ainsi que les deux transducteurs 4 et 5 sont connectés électriquement avec un ensemble d'organes électroniques et informatiques 14 et 15, dont la fonction est d'analyser les signaux électriques qui leur sont transmis et de les transformer simultanément en éléments de réponse : vitesse de circulation et/ou débit du fluide, densité et/ou concentration en matières solides et température du fluide. Le procédé de mesure, utilisant le dispositif ainsi décrit, est réalisé selon les deux étapes suivantes. Au cours d'une première période de temps, le transducteur 4 est connecté grâce au commutateur 12 au générateur d'impulsion 11 et émet par l'intermédiaire de son organe piézoélectrique 6 une impulsion ultrasonore qui se propage dans le sabot 23, selon une direction 16, faisant un angle $\alpha$ avec la perpendiculaire 9 à la génératrice 25 du conduit sur laquelle est positionné le sabot. L'impulsion ultrasonore 16 subit, au point de contact B entre le sabot et le fluide, une réfraction et pénètre dans le fluide selon la direction 17, faisant un angle de réfraction $\beta$ avec la perpendiculaire 9 à la génératrice 25 du conduit de mesure. Après avoir parcouru dans le fluide une distance égale à

$$\frac{D}{\sin\beta}$$

l'impulsion ultrasonore parvient sur la génératrice opposée 18 du conduit 1, et subit alors une réflexion totale sous le même angle $\beta$. L'impulsion réfléchie 19, après avoir effectué dans le fluide un parcours de même longueur $\dfrac{D}{\sin\beta}$

parvient en C à l'interface entre le fluide et le sabot 24 du transducteur 5, subit une réfraction à cette interface et pénètre dans le sabot 24 selon la direction 20, faisant l'angle $\alpha$ avec la perpendiculaire 10 à la génératrice 25. L'impulsion se propageant dans le sabot 24 est captée par l'organe piézoélectrique 7 du transducteur 5 qui fonctionne en récepteur et qui, de ce fait, est connecté par l'intermédiaire du commutateur 12 aux organes électroniques et informatiques 14 et 15. Le temps $t_{1-2}$ mis par l'impulsion ultrasonore entre son émission en 4 et sa réception en 5 pour effectuer le trajet 16, 17, 19 et 20 est ainsi mesuré par les organes électroniques et informatiques 14 et 15.

A l'issue du temps $t_s$, le commutateur 12 inverse les liaisons électriques entre générateur d'impulsions 11, organes électroniques et informatiques 14 et 15 et transducteurs 4 et 5, de telle sorte que le transducteur 4, qui fonctionnait jusqu'alors en émetteur, joue pendant la période de temps $t_s$ suivante le rôle de récepteur, et inversement, que le transducteur 5, qui jouait le rôle de récepteur, fonctionne au cours de cette même période de temps $t_s$ en émetteur. Ainsi, l'impulsion ultrasonore émise par le transducteur 5 effectue, selon le même trajet mais en sens inverse, le parcours 20, 19, 17 et 16 avant d'être captée par le transducteur 4 fonctionnant en récepteur. Le temps $t_{2-1}$, mis par l'impulsion ultrasonore entre son émission en 5 et sa réception en 4, est ainsi mesuré par les organes électroniques et informatiques 14 et 15. Le calcul de la vitesse V de circulation du fluide ainsi que son débit en fonction des temps $t_{1-2}$ et $t_{2-1}$ est ainsi effectué à l'issue de la période de temps 2 $t_s$ par les organes électroniques et informatiques 14 et 15.

la génératrice 25, les perpendiculaires 9 et 10 et les parcours 16, 17, 19 et 20 de l'impulsion ultrasonore sont situés dans un même plan passant par l'axe du conduit 1.

De même, les signaux électriques, transmis par la sonde thermométrique 13 connectée à l'organe électronique et informatique 15, sont analysés par ce dernier et contribuent à la détermination de la densité du fluide en circulation et/ou de sa concentration en matières solides.

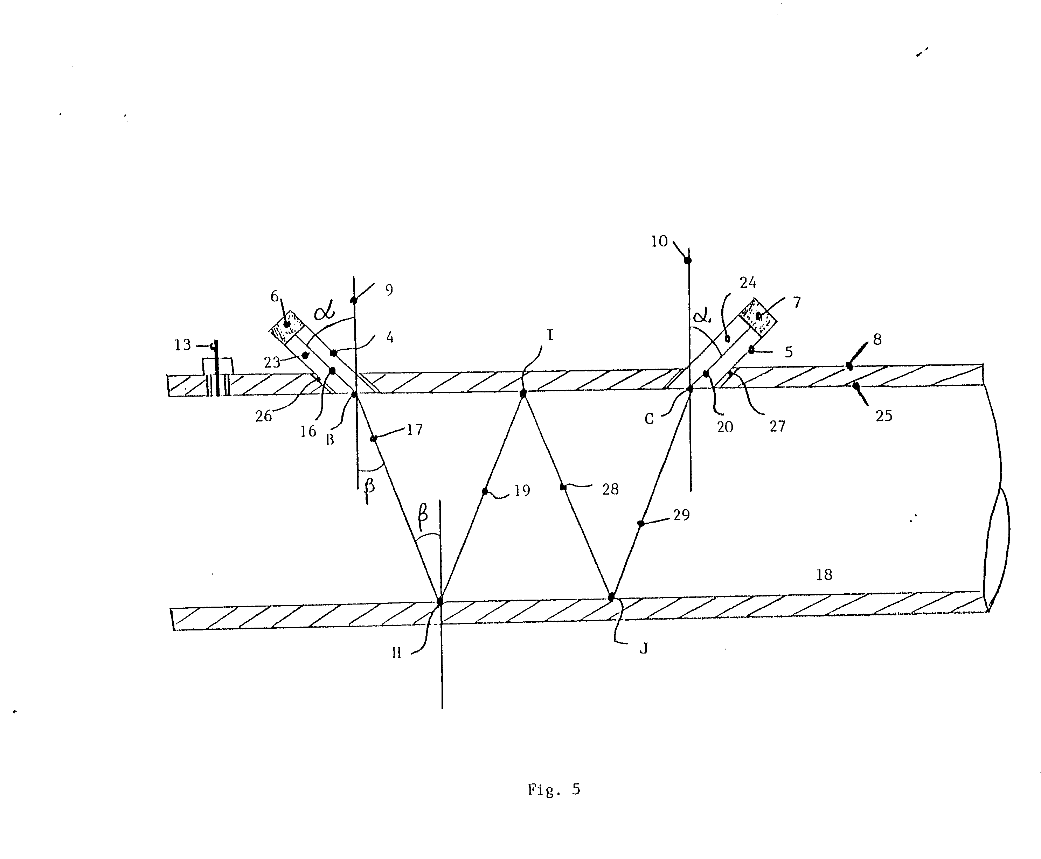

La figure 5 montre un parcours en zig-zag de l'impulsion ultrasonore effectuant trois réflexions totales sur les parois du conduit 1 de mesure entre son émission et sa réception.

Le dispositif adopté est le même que dans le cas de la figure 4 mais la distance L précédemment définie entre les deux transducteurs 4 et 5 est augmentée d'une longueur égale à $2D.tg\beta$, afin de permettre à l'impulsion ultrasonore d'effectuer trois réflexions totales (une en I sur la génératrice 25 et deux en H et J sur la génératrice 18), avant d'être captée par le transducteur 5. La distance parcourue par l'impulsion suivant le tracé 16, 17, 19, 28, 29 et 20 étant supérieure d'une longueur égale à

$$\frac{D}{\sin\beta}$$

à la distance parcourue dans chaque sens de propagation de l'impulsion suivant le tracé illustré sur la figure 4, l'erreur sur les mesures des temps $t_{1-2}$ et $t_{2-1}$ est diminuée et la précision de la mesure de la vitesse V de circulation du fluide est, de ce fait, améliorée.

La figure 6 représente, de façon tout à fait schématique, le diagramme servant à la détermination de la densité du fluide en circulation d, et/ou de sa concentration en matières solides $m_s$. Ce diagramme tridimensionnel se réfère à trois axes de coordonnées correspondant, le premier à l'axe des températures T du fluide en circulation, le second au temps de parcours moyen

$$\frac{t_{2-1} + t_{1-2}}{2}$$

de l'impulsion ultrasonore, le troisième aux densités d du fluide et/ou aux concentrations $m_s$ en matières solides. La surface curviligne S, figurant sur le diagramme, est établie à partir des mesures expérimentales des trois paramètres T,

$$\frac{t_{2-1} + t_{1-2}}{2}$$

d (et/ou $m_s$) effectuées préalablement, sur une échelle aussi large que possible, sur des échantillons témoins du fluide dont on veut ultérieurement assurer le contrôle. Tout point de ladite surface permet de déterminer les trois paramètres T,

$$\frac{t_{2-1} + t_{1-2}}{2}$$

d (et/ou $m_s$) qui lui sont associés et qui caractérisent l'état du fluide. Lors de l'application industrielle, il suffit de déterminer la valeur de deux de ces paramètres pour pouvoir extraire le troisième à l'aide du diagramme. D'une façon générale, les paramètres T,

$$\frac{t_{2-1} + t_{1-2}}{2}$$

dont les valeurs sont mesurées à l'aide du dispositif faisant l'objet de la présente invention, constituent les deux variables du système permettant de déterminer le troisième paramètre d (et/ou $m_s$). Les données mathématiques permettant de caractériser la surface S sont établies par régression multiple et introduites dans les organes électroniques et informatiques 14 et 15, en sorte que le diagramme illustré schématiquement sur la figure 6 ne constitue pas un élément visible du dispositif, mais est utilisé pour l'établissement des données de calcul qui participent à la détermination des valeurs de d (et/ou $m_s$).

Afin d'illustrer de façon plus précise les possibilités offertes par la présente invention, on donne ci-après un exemple d'utilisation du dispositif de mesure selon la figure 5.

On a utilisé un conduit de mesure, de diamètre 60 mm, parcouru par une suspension aqueuse de $CaCO_3$, dont la dimension des particules était répartie selon les données suivantes :

99% < 5µm
90% < 2µm
50% < 1 µm
10% < 0,2 µm

La vitesse de circulation du fluide était fixée à 5 m/s. Le conduit était équipé de deux transducteurs fonctionnant alternativement en émetteur-récepteur, puis en récepteur-émetteur, l'impulsion ultrasonore se propageant dans le fluide était émise sous une fréquence préférentielle de 1 MHz. Les deux transducteurs étaient inclinés sur le conduit d'un angle $\alpha$ égal à 50° par rapport à la perpendiculaire à la génératrice du conduit sur laquelle ils étaient positionnés, et possédaient des sabots en matières polymères telles que polyimides. L'impulsion ultrasonore traversant le fluide, effectuait trois réflexions totales sur le conduit. Les deux transducteurs étaient distants l'un de l'autre d'une longueur de 144 mm. Dans ces conditions, l'angle de réfraction $\beta$ était voisin de 30°, la distance parcourue par l'impulsion dans la suspension était d'environ 280 mm, et la différence des temps de parcours mesurée $\Delta t = t_{2-1} - t_{1-2}$ était de 924 nanosecondes pour la vitesse de circulation du fluide de 5 m/s. L'appréciation des temps de parcours étant de 10 nanosecondes, l'erreur sur la mesure est inférieure à 1%.

Les dispositif et procédé selon l'invention s'appliquent à une grande diversité de fluides, tels que liquides et/ou suspensions. On cite, parmi les applications possibles, des produits alimentaires tels que le vin, le lait, le chocolat, des suspensions minérales, telles que des suspensions de carbonate de calcium, de kaolin, de gypse, ainsi que des fluides visqueux pouvant circuler à température élevée, tels que par exemple, les huiles et les hydrocarbures, des métaux liquides, tels que mercure, sodium et étain, ou encore des sels fondus seuls ou en mélange.

## Revendications

1) Dispositif pour la mesure simultanée de la densité, de la concentration en matières solides, de la vitesse d'écoulement, du débit et de la température d'un fluide à l'état liquide ou pâteux, par transmission ultrasonore se propageant dans ledit fluide, caractérisé en ce qu'il comprend :

a) un conduit de mesure (1) dans lequel circule le fluide,

b) deux transducteurs (4) et (5) reliés à une source ultrasonore (11), en contact avec le conduit ou en contact avec le fluide s'y trouvant, fonctionnant de manière alternative en émetteur-récepteur et inversement, placés obliquement selon un angle d'incidence $\alpha$, en position symétrique l'un par rapport à l'autre sur une même génératrice (8) du conduit, de façon que l'onde ultrasonore se propage dans le fluide selon un angle de réfraction $\beta$ et se réfléchisse en totalité au moins une fois sur la paroi (18) du conduit opposée à celle sur laquelle sont placés les deux transducteurs, avant d'être captée par le transducteur-récepteur, ces deux angles $\alpha$ et $\beta$ étant définis par rapport à un plan perpendiculaire à l'axe du conduit,

c) une sonde (13) de mesure de température positionnée sur le conduit (1) et en contact direct avec le fluide,

d) des organes électroniques (14) et informatiques (15) associés à l'ensemble des deux transducteurs et à la sonde de mesure de température, et assurant la gestion des informations qui leur sont transmises sous forme de signaux électriques.

2) Dispositif selon la revendication 1, caractérisé en ce que le conduit peut être réalisé en l'un des matériaux choisis dans le groupe constitué par les aciers, l'aluminium et les alliages, le verre, les matières polymères.

3) Dispositif selon les revendications 1 ou 2, caractérisé en ce que, afin de placer les transducteurs en contact direct selon l'angle d'incidence $\alpha$ avec le conduit contenant le fluide, ledit conduit est doté d'une géométrie adaptée formée de deux plateformes.

4) Dispositif selon la revendication 3, caractérisé en ce que les plateformes permettant l'inclinaison des transducteurs selon l'angle d'incidence $\alpha$ sont munies chacune d'une ouverture permettant le contact direct des transducteurs avec le fluide contenu.

5) Dispositif selon les revendications 1 ou 2, caractérisé en ce que, afin de placer les transducteurs en contact indirect selon l'angle d'incidence α avec le conduit de mesure, des sabots sont insérés entre les transducteurs et le conduit.

6) Dispositif selon la revendication 5, caractérisé en ce que le conduit de mesure est doté d'ouvertures permettant le contact indirect des transducteurs et du fluide à mesurer par l'intermédiaire des sabots en contact direct avec ledit fluide.

7) Dispositif selon l'une ou l'autre des revendications 5 ou 6, caractérisé en ce que les sabots sont en matières polymères et préférentiellement en polyimides.

8) Dispositif selon l'une quelconque des revendications 1 à 7, caractérisé en ce que l'angle de réfraction β est au moins égal à 28°.

9) Dispositif selon l'une quelconque des revendications 1 à 8, caractérisé en ce que l'angle d'incidence α confondu avec l'angle d'inclinaison de l'axe des transducteurs par rapport à un plan perpendiculaire à l'axe du conduit, est donné par la relation :

$$\sin\alpha = \frac{c}{c_s} \sin\beta$$

dans laquelle $c_s$ est la vitesse de propagation de l'onde ultrasonore dans le fluide et $c$ est la vitesse de propagation de l'onde ultrasonore dans les sabots, ou dans la paroi, et qui est égale à $c_s$ quand les transducteurs sont en contact direct avec le fluide contenu dans le conduit.

10) Dispositif selon l'une quelconque des revendications 1 à 9, caractérisé en ce que la distance L entre les deux transducteurs, émetteur et récepteur, mesurée à partir des deux centres des deux faisceaux ultrasonores respectivement pénétrant dans le fluide et sortant du fluide après la réflexion totale, est donnée par la relation :
$L = 2nDtg\beta$
dans laquelle n est au moins égal à 1 et choisi de préférence entre 1 et 5 selon le nombre de réflexions totales souhaité sur la paroi du conduit, D étant le diamètre du conduit.

11) Procédé de mise en oeuvre du dispositif selon les revendications 1 à 10, caractérisé en ce que :

a) on émet à partir d'un transducteur-émetteur 1 pendant une période de temps une onde ultrasonore se propageant de l'amont vers l'aval dans le fluide sous un angle β par rapport à un plan perpendiculaire à l'axe du conduit, de telle manière que ladite onde se réfléchisse de préférence en totalité au moins une fois sur la génératrice opposée à celle sur laquelle est placé le transducteur-émetteur 1, avant d'être captée par un transducteur-récepteur 2 placé sur la même génératrice que 1 en aval de ce dernier,

b) on mesure le temps de parcours $t_{1-2}$ mis par l'onde ultrasonore entre son émission et sa réception,

c) on inverse les rôles entre les transducteurs 1 et 2, et on émet, pendant la période de temps suivante, une onde ultrasonore se propageant du transducteur-émetteur 2 vers le transducteur-récepteur 1 sous le même angle β dans le sens inverse de la circulation du fluide,

d) on mesure le temps de parcours $t_{2-1}$ de ladite onde entre son émission et sa réception,

e) simultanément, on mesure la température T du fluide à l'aide d'une sonde thermométrique placée sur le conduit en contact direct avec ledit fluide,

f) on traite les valeurs mesurées de $t_{1-2}$, $t_{2-1}$ et T dans un calculateur permettant de déterminer, d'une part la vitesse V de circulation du fluide et, d'autre part, la valeur de la densité et/ou de la concentration en particules solides du fluide en circulation.

12) Procédé selon la revendication 11, caractérisé en ce que, à partir de mesures effectuées sur des échantillons témoins du fluide à contrôler ultérieurement au moyen du dispositif selon l'invention, échantillons dont on connaît la nature, la composition, la densité d et/ou la concentration en matières solides $m_s$, la température T, le temps de parcours moyen

$$\frac{t_{2-1} + t_{1-2}}{2}$$

de la transmission ultrasonore, un diagramme tridimensionnel est établi, d'axes :
- température T du fluide,
- temps de parcours moyen

$$\frac{t_{2-1} + t_{1-2}}{2}$$

- densité d ou concentration en matières solides $m_s$,

ce diagramme résultant de l'établissement mathématique de surfaces de régression, calculées à partir de trois paramètres,

$$T, \quad \frac{t_{2-1} + t_{1-2}}{2} \quad et \quad d \quad et \quad T, \quad \frac{t_{2-1} + t_{1-2}}{2} \quad et \quad m_s,$$

et permettant pour un fluide de même nature mais de composition inconnue, à partir des mesures expérimentales de deux des trois paramètres traités par un calculateur, de déterminer la valeur du troisième paramètre du fluide en circulation dans le conduit de mesure.

13) Procédé selon la revendication 11, caractérisé en ce que l'onde ultrasonore émise par le transducteur-émetteur dans le fluide en circulation dans le conduit de mesure l'est sous une fréquence de 1 MHz.

Fig. 1

EP 0 352 203 A2

Fig. 2

Fig. 3

EP 0 352 203 A2

EP 0 352 203 A2

Fig. 4

Fig. 5

temps de parcours moyen

$$\frac{t_{2-1} + t_{1-2}}{2}$$

t = 24°C

concentration (%)

t = 20,5°C

température °C

Fig. 6